# EUROPEAN PATENT APPLICATION

(11) **EP 4 675 304 A1**
(43) Date of publication of application: **07.01.2026**
(21) Application number: 25177241.4
(22) Date of filing: 19.05.2025
(51) Int. Cl.: G01S 7/02, H01Q 1/42, G01S 13/931

(54) **RADAR ANTENNA MOUNTING SCHEME IN HOUSINGS.**

(30) Priority: 03.07.2024 JP 2024107447
(71) Applicant: Aisin Corporation, Kariya, Aichi 448-8650 (JP)
(72) Inventor: TAKEMOTO, Atsushi, Kariya, Aichi, 448-8650 (JP); TSUCHIYA, Katsuhiro, Kariya, Aichi, 448-8650 (JP)
(74) Representative: TBK

(57) **Abstract**

A radar device (10) includes: a plurality of array antennas (16) each having a plurality of elements (16a) arranged in an array that electrically vibrate in a predetermined vibration direction to transmit and receive a detection wave for detecting an object; a substrate (18) having a first surface (18a) on which the array antennas are mountable and a second surface (18b) on a side opposite to the first surface; a case (20) configured to accommodate the substrate and support the second surface; a cover (22) configured to cover, from a side of the first surface of the substrate, the case in a state where the substrate is accommodated; and a fastening member (24) configured to fasten the cover, the substrate, and the case together in a first region (W1) on a side where a distance to a substrate edge parallel to a first direction (D) in the substrate is large with reference to a mounting position on the substrate on which the array antenna (16B) which electrically vibrates in a second direction (E) orthogonal to the first direction in which the elements are arranged, among the array antennas, is mounted.

## Description

### TECHNICAL FIELD

This disclosure relates to a radar device.

### BACKGROUND DISCUSSION

A radar device includes, for example, a substrate on which an antenna is mounted, a case that supports the substrate, and a cover that covers the substrate. The substrate is held between the case and the cover. The antenna emits a radio wave through a dielectric cover. A technique has been put into practical use in which a situation in a vehicle cabin, for example, an occupant or a seating position is detected using such a radar device as an in-vehicle device.

Examples of the related art include JP 2020-008474A (Reference 1).

In order to mount the radar device in the vehicle cabin having an extremely limited surplus space, it is necessary to miniaturize the radar device. That is, it is necessary to miniaturize a housing, such as the case or the cover forming the radar device, and to miniaturize the substrate. On the other hand, it is not desirable to reduce the number of mounted antennas in order to maintain detection characteristics of the radar device. In such a situation, when the substrate is miniaturized, a substrate area is insufficient with respect to an antenna opening area, and when the antenna operates, the antenna is easily affected by the housing or substrate ends. That is, radio wave directional characteristics may be unstable. When the case is fitted to the cover, screw fastening is often used in terms of workability or cost, but if screws are arranged without considering radio wave characteristics, the shape of the cover for screw arrangement or the presence of the screws themselves may affect the radio wave characteristics, and the radio wave directional characteristics may further deteriorate.

A need thus exists for a radar device capable of reducing deterioration of the radio wave directional characteristics while achieving miniaturization.

### SUMMARY

According to an aspect of this disclosure, a radar device includes: for example, a plurality of array antennas each having a plurality of elements arranged in an array that electrically vibrate in a predetermined vibration direction to transmit and receive a detection wave for detecting an object; a substrate having a first surface on which the array antennas are mountable and a second surface on a side opposite to the first surface; a case configured to accommodate the substrate and support the second surface; a cover configured to cover, from a side of the first surface of the substrate, the case in a state where the substrate is accommodated; and a fastening member configured to fasten the cover, the substrate, and the case together in a first region on a side where a distance to a substrate edge parallel to a first direction in the substrate is greater with reference to a mounting position on the substrate on which the array antenna which electrically vibrates in a second direction orthogonal to the first direction in which the elements are arranged, among the array antennas, is mounted.

According to the radar device of this disclosure, it is possible to reduce deterioration of the radio wave directional characteristics while miniaturizing the substrate.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is an exemplary schematic diagram illustrating a vehicle on which a radar device according to an embodiment is mounted;
FIG. 2 is an exemplary schematic exploded perspective view illustrating main components of the radar device according to the embodiment;
FIG. 3 is an exemplary schematic plan view illustrating the radar device according to the embodiment as viewed from a cover (radome) side;
FIG. 4 is an exemplary schematic cross-sectional view illustrating the radar device according to the embodiment; and
FIG. 5 is an exemplary schematic perspective view illustrating the radar device according to the embodiment as viewed from the cover (radome) side.

### DETAILED DESCRIPTION

Hereinafter, exemplary embodiments disclosed here will be described. Configurations of the embodiments to be described below, and operations, results, and effects of the configurations are examples. The embodiments disclosed here can be implemented by configurations other than the configurations disclosed in the embodiments to be described below, and at least one of various effects based on a basic configuration and a derivative effect can be obtained.

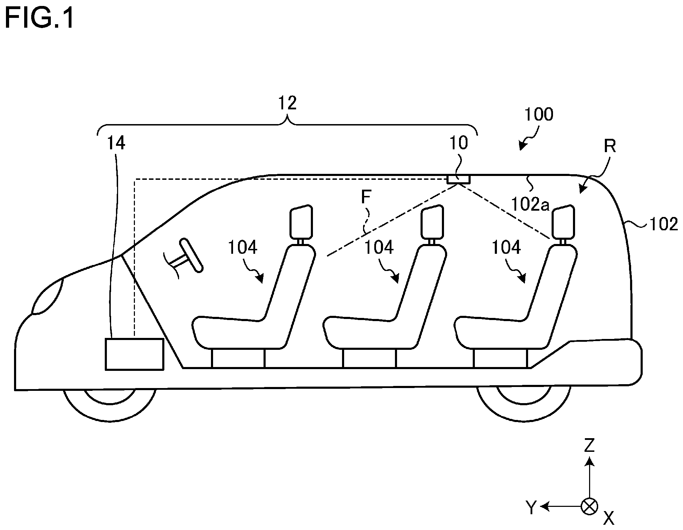

FIG. 1 is an exemplary schematic diagram illustrating a vehicle 100 on which a radar device 10 according to an embodiment is mounted. As illustrated in FIG. 1, the vehicle 100 according to the present embodiment includes a vehicle body 102, a plurality of seats 104, and an occupant detection system 12. The vehicle 100 is not limited to this example.

In this specification, an X axis, a Y axis, and a Z axis are defined for convenience. The X axis, the Y axis, and the Z axis are orthogonal to one another. The X axis is provided along a width of the vehicle 100. The Y axis is provided along a length of the vehicle 100. The Z axis is provided along a height of the vehicle 100.

Further, in this specification, an X direction, a Y direction, and a Z direction are defined. The X direction is a direction along the X axis and includes a +X direction (right direction) indicated by an arrow of the X axis and a -X direction (left direction) in a direction opposite to the arrow of the X axis. The Y direction is a direction along the Y axis and includes a +Y direction (front direction) indicated by an arrow of the Y axis and a -Y direction (rear direction) in a direction opposite to the arrow of the Y axis. The Z direction is a direction along the Z axis and includes a +Z direction (upper direction) indicated by an arrow of the Z axis and a -Z direction (lower direction) in a direction opposite to the arrow of the Z axis.

The plurality of seats 104 are provided in a vehicle cabin R of the vehicle body 102. The occupant detection system 12 can detect presence or a position of an occupant who is present in the vehicle cabin R. A detection result of the occupant by the occupant detection system 12 can be used for, for example, a seat belt reminder. The seat belt reminder notifies the occupant, for example, of a seat position where a seat belt is not fastened while the occupant is detected in the vehicle cabin R.

The occupant detection system 12 includes the radar device 10 and a control device 14. The radar device 10 may also be referred to as a sensor device or a radio wave sensor. The radar device 10 is not limited to being mounted on the occupant detection system 12, and may be mounted on another system that detects an object.

The radar device 10 is provided, for example, on a ceiling 102a of the vehicle body 102. The ceiling 102a is provided at an end of the vehicle cabin R in the +Z direction. The radar device 10 emits a radio wave as a transmission wave to the vehicle cabin R, and receives a reflected wave generated when the transmission wave is reflected by an object present in the vehicle cabin R. The transmission wave and the reception wave may be collectively referred to as a detection wave. That is, the radar device 10 forms a detection area F and detects an object in the detection area F. The control device 14 is provided in a dashboard, for example, and is electrically connected to the radar device 10 via a network such as a controller area network (CAN). Positions of the radar device 10 and the control device 14 are not limited to this example. The occupant detection system 12 may include a plurality of radar devices 10.

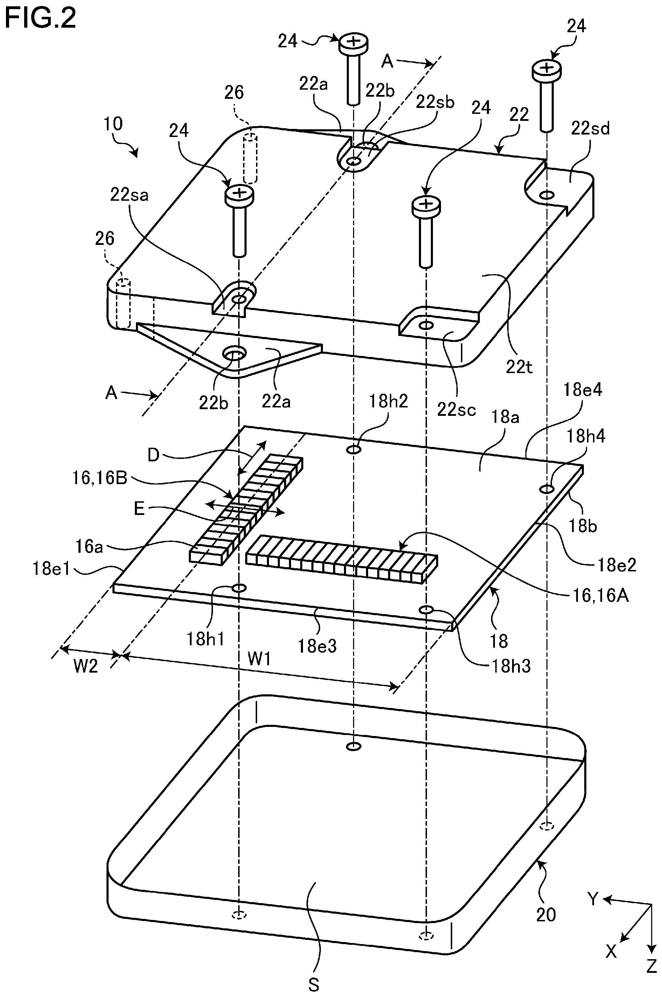

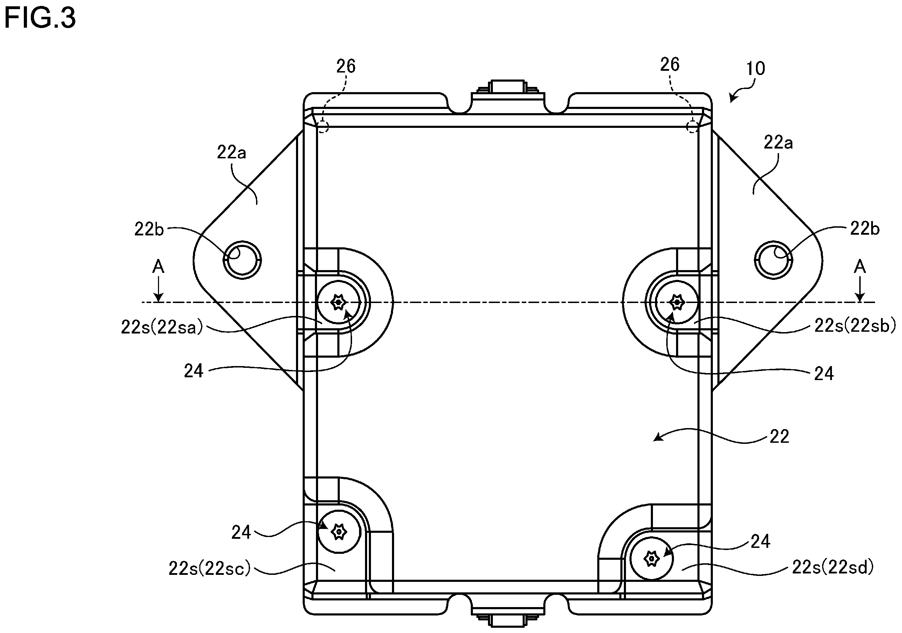

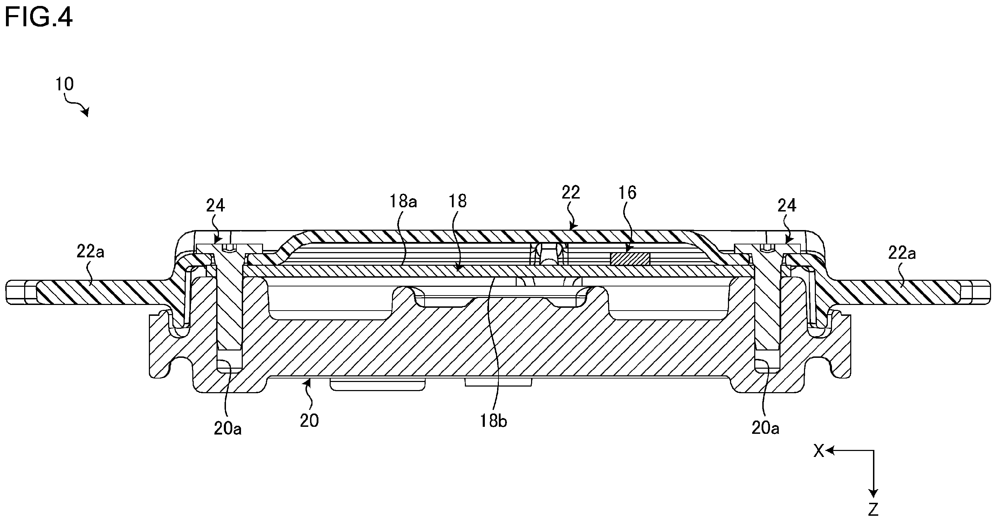

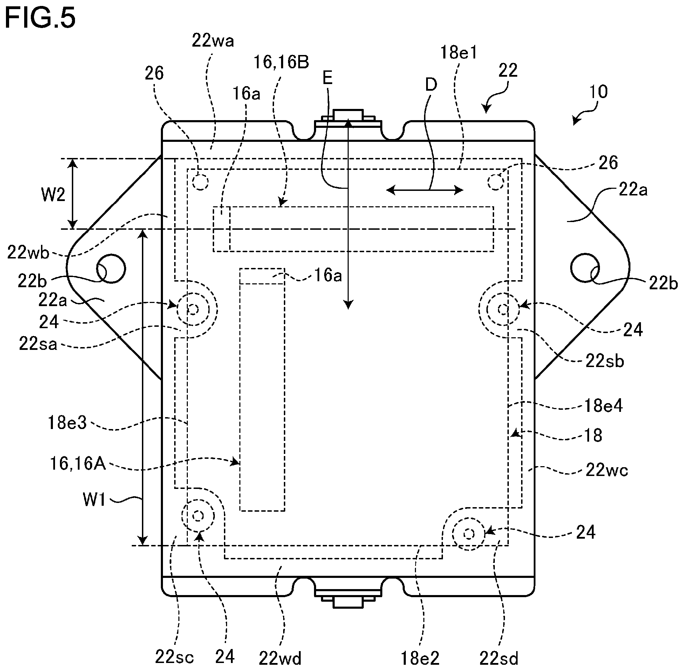

FIG. 2 is an exemplary schematic exploded perspective view illustrating main components of the radar device 10. FIG. 3 is an exemplary schematic plan view illustrating the radar device 10 as viewed from a cover side. FIG. 4 is an exemplary schematic cross-sectional view illustrating the radar device 10. FIG. 5 is an exemplary schematic perspective view illustrating the radar device 10 as viewed from the cover side.

The radar device 10 includes, as main components, array antennas 16, a substrate 18, a case 20, a radome 22 that functions as a cover, and screws 24 and the like that function as fastening members.

The array antennas 16 transmit and receive a detection wave for detecting an object by electrically vibrating a plurality of antenna elements 16a arranged in an array in a predetermined vibration direction. A plurality of array antennas 16 are mounted on the substrate 18. FIG. 2 illustrates an example in which a transmission array antenna 16A and a reception array antenna 16B are mounted on a first surface 18a of the substrate 18 in a state of being rotated by, for example, about 90° to be orthogonal to each other. The arrangement of the antenna elements 16a and a mounting position or a mounting form of the array antenna 16 (the transmission array antenna 16A or the reception array antenna 16B) are not limited to this example.

The transmission array antenna 16A emits a radio wave as a transmission wave to the vehicle cabin R. For example, the transmission array antenna 16A emits a radio wave (detection wave) at a predetermined frequency. The reception array antenna 16B receives a reflected wave (detection wave) generated when the transmission wave is reflected by an object present in the vehicle cabin R. The transmission array antenna 16A and the reception array antenna 16B may be virtually arranged, for example, in a matrix shape through signal processing, so that the detection wave can be transmitted and received with desired radio wave directional characteristics with respect to an antenna opening area. The array antennas 16 can form the detection area F that spreads from the first surface 18a on which the array antennas 16 are provided toward substantially the -Z direction (see FIG. 1), which is a direction in which the first surface 18a faces.

The substrate 18 is, for example, a flat printed circuit board (PCB) extending in the X-Y directions. The substrate 18 is not limited to this example. The substrate 18 includes, for example, the first surface 18a on which the array antennas 16 may be mounted and a second surface 18b on a side opposite to the first surface 18a. Although not illustrated, the substrate 18 further includes various electronic components and electrical circuits. For example, a transmitter and a receiver are provided on the substrate 18. The transmitter and the receiver include the array antennas 16, and an oscillation circuit, an AD converter, an amplifier, a filter circuit, and the like that are provided on the substrate 18. The transmitter emits a transmission wave from the transmission array antenna 16A. The receiver generates an electrical signal indicating an intensity of the reflected wave received by the reception array antenna 16B.

Further, the substrate 18 includes an electronic control unit (ECU) of the radar device 10. The ECU is a microcontroller including a central processing unit (CPU), a memory, and various electronic components. The ECU executes, for example, processing related to control over the transmitter and the receiver and data generation based on the reflected wave received by the receiver. The ECU is mounted on the second surface 18b of the substrate 18, for example. The electronic components and the electrical circuits other than the array antennas 16 may be collectively mounted on the second surface 18b side to reduce an influence on transmission and reception of the detection wave for the array antenna 16.

The control device 14 illustrated in FIG. 1 is, for example, an ECU including a CPU, a memory, and various electronic components. The control device 14 is electrically connected to the ECU of the substrate 18. The control device 14 controls the ECU of the substrate 18 to cause the transmission array antenna 16A to emit the transmission wave, and acquires, from the ECU of the substrate 18, the electrical signal indicating the intensity of the reflected wave received by the reception array antenna 16B.

The case 20 is, for example, a bottomed box made of metal and having a substantially rectangular shape with one side opened, and has an accommodating space S for accommodating the substrate 18 therein. The case 20 supports the second surface 18b of the substrate 18. The case 20 may include a heat dissipation fan, a heat dissipation fin, and the like for dissipating heat generated from the array antennas 16, other electronic components, and the like that are mounted on the substrate 18 accommodated in the case 20.

The radome 22 is formed of, for example, a dielectric such as synthetic resin, and functions as a cover that covers the case 20 in a state where the substrate 18 is accommodated from a side of the first surface 18a of the substrate 18. The radome 22 is fitted to the case 20. A seal member may be interposed between the radome 22 and the case 20. By fitting the radome 22 to the case 20, it is possible to substantially seal the accommodating space S and prevent water, dust, and the like from entering the accommodating space S in which the substrate 18 is accommodated. By covering the substrate 18 with the radome 22 exposed to the vehicle cabin R side when the radar device 10 is used or the like, even when an external force is applied to the radar device 10 from the vehicle cabin R side, the radome 22 has a function of protecting the substrate 18 and the like from the external force. The detection wave (transmission wave) emitted from the array antenna 16 and the reflected wave (reception wave) reflected by the object are transmitted and received through the radome 22.

As illustrated in FIGS. 2 and 3, the radome 22 has, for example, flanges 22a provided on a part of outer walls facing each other. In the case of FIGS. 2 and 3, for example, two flanges are provided. A fixing opening 22b is formed in each of the flanges 22a. For example, a fixing member such as a screw or a clip can be inserted into the fixing opening 22b. The radar device 10 in which the radome 22, the substrate 18, and the case 20 are integrated can be fixed to the ceiling 102a of the vehicle cabin R by a screw, a clip, or the like that is inserted into the fixing opening 22b of the flange 22a.

As illustrated in FIGS. 2 and 3, counterbore portions 22s (22sa, 22sb, 22sc, and 22sd) are formed at predetermined positions of the radome 22 to stabilize fastening of the screws 24 when the screws 24 are used and to smooth a surface of the radome 22 by accommodating screw heads. Details of the positions of the counterbore portions 22s including fastening positions of the screws 24 will be described later.

The screws 24 are fastening members that fasten the radome 22, the substrate 18, and the case 20 together in a state of being stacked in the Z direction to complete the radar device 10 as an all-in-one sensor device. The screws 24 may be made of metal in consideration of cost and workability, but is not limited thereto. FIG. 4 is a cross-sectional view taken along a line IV-IV in FIG. 2 (FIG. 3). As illustrated in FIG. 4, each of the screws 24 is inserted from the radome 22 side, penetrates the substrate 18, and then is screwed into a female screw portion 20a formed in the case 20. As a result, the substrate 18 is fastened together with the radome 22 and the case 20 while being sandwiched therebetween. Since the substrate 18 is fastened together with the radome 22 and the case 20 while being sandwiched therebetween, the substrate 18 is firmly fixed in the radar device 10. As a result, even when the radar device 10 is mounted on the vehicle 100 and used in a vibration environment, the detection wave can be stably transmitted and received.

When a substrate is miniaturized with respect to an antenna opening area in order to miniaturize a radar device, a ground of the substrate is weak, and the radar device tends to be electrically affected by a radome and a case, and thus electrical instability may occur. As a result, the radio wave directional characteristics of the radar device may deteriorate. The detection wave in an electrically unstable state is likely to be reflected or refracted due to wall surfaces of the radome, and is likely to be affected by the shape of the radome itself or screws used for fastening the radome, the substrate, and the case together. As a result, the radio wave directional characteristics of an array antenna (the radar device) may further deteriorate.

FIG. 2 is a diagram illustrating a configuration of the radar device 10 according to the present embodiment. A general structure of fastening a radome, a substrate, and a case together and radio wave directional characteristics will be described with reference to FIG. 2. For example, when the substantially rectangular substrate 18 is fastened together with the radome 22 and the case 20, the screws 24 are generally arranged and fixed at positions corresponding to four corners of the substrate 18. With such a structure, a case where any antenna element 16a of the reception array antenna 16B electrically vibrates in an arrow E direction (a second direction to be described later) is considered. It is known that the detection wave in each antenna element 16a that electrically vibrates in the arrow E direction is easily affected by an object that is present and parallel to an arrangement direction of the antenna elements 16a (a direction orthogonal to the arrow E direction). For example, it is known that the detection wave is likely to deflect backward from an edge portion 18e1 (an edge portion parallel to the arrangement direction of the antenna elements 16a of the reception array antenna 16B) of the substrate 18 that is located at a position close to the antenna elements 16a (where a margin distance is small). On the other hand, it is known that a degree to which the detection wave deflects backward from an edge portion 18e2 (an edge portion parallel to the arrangement direction of the antenna elements 16a of the reception array antenna 16B) of the substrate 18 that is located at a position far from the antenna elements 16a (where a margin distance is large), is reduced as compared with the edge portion 18e1 side, which has a small margin distance from the antenna elements 16a.

That is, when the antenna elements 16a electrically vibrate in the arrow E direction, a balance between radio wave characteristics on the edge portion 18e1 side and the radio wave characteristics on the edge portion 18e2 side of the substrate 18 may be lost due to a difference in the margin distance, and this may cause the radio wave directional characteristics of the array antenna 16 (radar device 10) to deteriorate. The wall surfaces of the radome 22 are present in the vicinity of the edge portion 18e1 that is likely to be affected by the deflection of the detection wave. In this case, when the shape of the wall surfaces of the radome 22 is complicated (for example, a change in wall thickness is complicated) or when the screws 24 for fastening to the wall surfaces are present, reflection or refraction of the detection wave is likely to occur, and this may cause a more significant influence on the radio wave characteristics. As a result, this may cause the radio wave directional characteristics of the array antenna 16 (radar device 10) to deteriorate further. It is known that a wall surface parallel to an electrical vibration direction (the arrow E direction) of the antenna elements 16a has little influence on the radio wave characteristics.

Therefore, in the radar device 10 according to the present embodiment, as illustrated in FIGS. 2 and 5 and the like, for example, an object extending in a direction orthogonal to the electrical vibration direction (the arrow E direction) of the antenna elements 16a (the reception array antenna 16B) specifically has a shape in which a change in wall thickness of a wall surface 22wa of the radome 22 is reduced. That is, the wall surface 22wa of the radome 22 is shaped so that there are no screws 24 or any portions with a changed thickness for inserting the screws 24 therethrough.

The structure of the radar device 10 will be specifically described with reference to FIGS. 2 and 5. First, among the array antennas 16, the array antenna 16 (for example, the reception array antenna 16B) capable of vibrating electrically in a second direction E (the arrow E direction) orthogonal to a first direction D in which the antenna elements 16a are arranged will be focused. With reference to a mounting position of the reception array antenna 16B mounted on the substrate 18, the edge portion 18e2 side parallel to the first direction D and far from the mounting position of the reception array antenna 16B is defined as a first region W1. With reference to the mounting position of the reception array antenna 16B, the edge portion 18e1 side parallel to the first direction D and close to the mounting position is defined as a second region W2. As described above, the fastening positions of the screws 24 (fastening members) used for joint fastening, which are set in the second region W2 in a general structure, are set in the first region W1 in the present embodiment.

That is, as illustrated in FIG. 2, through holes 18h1 and 18h2 for fastening the radome 22, the substrate 18, and the case 20 together are provided in the first region W1 in the substrate 18. Therefore, as illustrated in FIG. 5, when the reception array antenna 16B (the antenna element 16a) electrically vibrates in the second direction E, the counterbore portions 22sa and 22sb used for the screws 24 are provided at other positions instead of the wall surface 22wa of the radome 22 in the vicinity of the edge portion 18e1 where the margin distance is small and from which the detection wave (radio wave) is likely to deflect. As a result, the shape of the wall surface 22wa can be a substantially uniform and simple shape with little change in wall thickness, and the reflection or refraction of the detection wave on the wall surface 22wa is reduced. Therefore, it is possible to reduce the influence brought by the wall surface 22wa on the radio wave characteristics of the reception array antenna 16B (the antenna element 16a). Further, since the screws 24 are not provided on the wall surface 22wa, the influence on the radio wave characteristics due to the screws 24 can also be eliminated.

The counterbore portions 22sa and 22sb of the screws 24 formed in the first region W1 are formed on wall surfaces 22wb and 22wc of the radome 22 that are present on the side of the array antenna 16 capable of vibrating electrically in the second direction E (the arrow E direction). In this case, as described above, since the wall surfaces 22wb and 22wc are parallel to the electrical vibration direction (the second direction E) of the antenna elements 16a, it can be considered that shapes of the wall surfaces 22wb and 22wc or the presence of the screws 24 hardly affects the radio wave characteristics of the array antenna 16.

Since the screws 24 are not provided in the second region W2 on the wall surface 22wa side, it is unnecessary to provide the through holes 18h1 and 18h2 used for the screws 24 in the substrate 18 in the second region W2 (on the wall surface 22wa side). As a result, at least the size of the second region W2 of the substrate 18 in the second direction E can be reduced. That is, it is possible to reduce deterioration of the radio wave directional characteristics while miniaturizing the radar device 10.

Among the screws 24, the screws 24 or the counterbore portions 22sc and 22sd in the vicinity of the edge portion 18e2 of the substrate 18 originally have a low influence on the radio wave characteristics of the array antenna 16, and thus an arrangement of end portions of the substrate 18 may be maintained.

The counterbore portions 22sa, 22sb, 22sc, and 22sd (through holes 18h1, 18h2, 18h3, and 18h4 in the substrate 18) may be provided at any position in the first region W1 as long as a joint fastening strength (fastening strength) among the substrate 18, the case 20, and the radome 22 can be secured. In FIG. 2 and the like, an example in which four screws 24 are used for joint fastening is illustrated, but the number of screws 24 may be appropriately increased or decreased as long as the joint fastening strength required for fastening the substrate 18, the case 20, and the radome 22 together can be secured.

In this manner, positions at which the substrate 18, the case 20, and the radome 22 are fastened together are set in the first region W1 in which a distance to an end portion of the substrate 18 parallel to the direction which is orthogonal to the electrical vibration direction of the array antenna 16 can be sufficiently secured. With this structure, it is possible to reduce the reflection or refraction due to the wall surface 22wa of the radome 22 in the vicinity of the array antenna 16. Since the screws 24 are not provided on the wall surface 22wa, reflection or refraction due to the screws 24 can be reduced, and since the screws 24 are not provided, space can be saved. Therefore, according to the configuration described above, it is possible to reduce deterioration of the radio wave directional characteristics while miniaturizing the radar device 10.

As described above, in the radar device 10 according to the present embodiment, the fastening positions of the screws 24 are set in the first region W1, which is on the edge portion 18e2 side far from the array antenna 16 among the edge portions of the substrate 18 and parallel to the direction orthogonal to the electrical vibration direction of the array antenna 16, on the substrate 18. Therefore, static load characteristics of the radome 22 may deteriorate on the second region W2 side where the joint fastening is not performed. When an external force is applied to a portion where the static load characteristics deteriorate, for example, when the portion is pressed from a side of a radiation surface 22t of the detection wave of the radome 22, a disadvantage such as deformation may be caused in the radome 22, the internal substrate 18, or the like.

Therefore, in the case of the radar device 10 according to the present embodiment, support portions 26 may be provided on at least a part of the second region W2 side (the side where the joint fastening by the screws 24 is not performed) opposite to the first region W1 side on the substrate 18 with the array antenna 16 capable of vibrating electrically in the second direction E being sandwiched. The support portion 26 has a function of supporting the radome 22 with respect to the substrate 18 and the case 20. The support portion 26 can be formed, for example, on a back side (inner wall surface) of the radiation surface 22t of the detection wave of the radome 22. As illustrated in FIG. 2, each of the support portions 26 can be, for example, a pin-shaped boss provided on the inner wall surface of the radome 22. The support portions 26 contact and press, for example, both end portions of the edge portion 18e1 of the substrate 18 when the radome 22 is fastened together with the substrate 18. As a result, the static load characteristics of the radome 22 (the radar device 10) are improved, and for example, even when an external force is applied to the radome 22, a function of protecting the radome 22 (the radar device 10) from damage due to the external force is improved.

The support portion 26 is formed of the same material as that of the radome 22 and has a minimum size and shape in which a necessary strength can be obtained, so that the influence on the radio wave characteristics of the array antenna 16 can be minimized. The support portion 26 may be provided at any position as long as the position corresponds to the second region W2. The number of support portions 26 to be provided may be appropriately changed as long as the static load characteristics required for the radar device 10 are obtained, and at least one or more support portions 26 may be provided. The support portion 26 may be provided, for example, at a central position in the second region W2. As illustrated in FIG. 2, it is desirable that the support portions 26 are provided at both end portions in the second region W2 of the substrate 18 in the first direction D, that is, corner portions of the radome 22. In this case, the support portions 26 can efficiently and stably support the radome 22 while the influence on the radio wave characteristics due to the support portions 26 is minimized, and can contribute to the improvement of the static load characteristics.

In the example illustrated in FIG. 2 and the like, the support portions 26 are integrally formed with the radome 22. Alternatively, in another embodiment, the support portion 26 may be integrally formed with the substrate 18 or may be provided as a spacer of an independent component between the substrate 18 and the radome 22. In either case, the support portions 26 may support the radome 22 with respect to the substrate 18. The support portions 26 may also be provided on the first region W1 side. The static load characteristics of the radome 22 (the radar device 10) as a whole can be improved by providing the support portions 26 at positions other than arrangement positions of the screws 24. As long as the fastening strength among the case 20, the substrate 18, and the radome 22 can be secured, the support portions 26 may be provided instead of a part of the screws 24.

In this manner, the radar device 10 according to the present embodiment includes: the plurality of array antennas 16 each having the plurality of antenna elements 16a (elements) arranged in an array that electrically vibrate in a predetermined vibration direction to transmit and receive a detection wave for detecting an object; the substrate 18 having the first surface 18a on which the array antennas 16 are mountable and the second surface 18b on the side opposite to the first surface 18a; the case 20 that accommodates the substrate 18 and supports the second surface 18b; the radome 22 (cover) that covers, from the side of the first surface 18a of the substrate 18, the case 20 in a state where the substrate 18 is accommodated; and the screw 24 (fastening member) that fastens the radome 22, the substrate 18, and the case 20 together in the first region W1 on the side where the distance to the substrate edge parallel to the first direction D in the substrate 18 is large with reference to the mounting position on the substrate 18 on which the array antenna 16 which electrically vibrates in the second direction E orthogonal to the first direction D in which the antenna elements 16a are arranged, among the array antennas 16, is mounted.

According to this configuration, for example, the screws 24 for fastening the case 20, the substrate 18, and the radome 22 together are arranged in the first region W1 where a large margin distance can be secured in the second direction E, which is the electrical vibration direction of the array antenna 16 in the substrate 18. As a result, the reflection or refraction due to the radome 22 in the vicinity of the array antenna 16 can be reduced, and the influence on the radio wave characteristics of the array antennas 16 (the antenna elements 16a) can be reduced. Therefore, it is possible to reduce deterioration of the radio wave directional characteristics of the array antenna 16. By setting the fastening positions of the screws 24 in the first region W1, it is possible to reduce a necessary area of the substrate on the side opposite to the first region W1 on the substrate 18 with the array antenna 16 being sandwiched, and it is possible to contribute to the miniaturization of the size of the substrate 18 and even the miniaturization of the radar device 10.

In the substrate 18 of the radar device 10 according to the present embodiment, for example, the support portions 26 that support the radome 22 (cover) with respect to the substrate 18 and the case 20 may be provided in at least a part of the first region W1 and the second region W2 on the opposite side with the array antenna 16 capable of vibrating electrically in the second direction E being sandwiched therebetween. According to this configuration, for example, the radome 22 can be supported by the support portions 26 even on the second region W2 side where the screws 24 for joint fastening are not provided. As a result, the static load characteristics of the radome 22 and further the radar device 10 against the external force can be improved.

The support portions 26 of the radar device 10 according to the present embodiment may be provided, for example, at the both end portions in the second region W2 of the substrate 18 in the first direction D. According to this configuration, for example, it is possible to efficiently and stably support the radome 22 while minimizing the influence on the radio wave characteristics due to the support portions 26, and it is also possible to contribute to the improvement of the static load characteristics.

While embodiments and modifications disclosed here have been described, these embodiments and modifications have been presented by way of example only, and are not intended to limit the scope of the disclosure. Novel embodiments can be implemented in various other forms, and various omissions, substitutions, and changes can be made without departing from the gist of the disclosure. The accompanying claims and their equivalents are intended to cover these embodiments or modifications as would fall within the scope and gist of the disclosure.

## Claims

1. A radar device (10) comprising:
a plurality of array antennas (16) each having a plurality of elements (16a) arranged in an array that electrically vibrate in a predetermined vibration direction to transmit and receive a detection wave for detecting an object;
a substrate (18) having a first surface (18a) on which the array antennas are mountable and a second surface (18b) on a side opposite to the first surface;
a case (20) configured to accommodate the substrate and support the second surface;
a cover (22) configured to cover, from a side of the first surface of the substrate, the case in a state where the substrate is accommodated; and
a fastening member (24) configured to fasten the cover, the substrate, and the case together in a first region (W1) on a side where a distance to a substrate edge parallel to a first direction (D) in the substrate is large with reference to a mounting position on the substrate on which the array antenna (16B) which vibrates electrically in a second direction (E) orthogonal to the first direction in which the elements are arranged, among the array antennas, is mounted.

2. The radar device according to claim 1, further comprising:
a support portion (26) configured to support the cover with respect to the substrate and the case, the support portion being disposed in at least a part of the first region and a second region (W2) on an opposite side on the substrate with the array antenna that electrically vibrates in the second direction being sandwiched therebetween.

3. The radar device according to claim 2, wherein
the support portion is provided at both end portions in the second region of the substrate in the first direction.
